# EUROPEAN PATENT SPECIFICATION

(11) **EP 1 955 206 B1**
(45) Date of publication and mention of the grant of the patent: **16.01.2019**
(21) Application number: 06812820.6
(22) Date of filing: 15.11.2006
(51) Int. Cl.: H04L 29/06, G06F 17/30

(54) **METHOD, SYSTEM AND DEVICES FOR SECURE DATA CAPTURE AND DATA TRANSFER OF SENSITIVE DATA**
VERFAHREN, SYSTEM UND EINRICHTUNGEN FÜR SICHERE DATENERFASSUNG UND DATENTRANSFER SENSITIVER DATEN
PROCÉDÉ, SYSTÈME ET DISPOSITIFS POUR EFFECTUER UN ACQUISITION SÉCURISÉE ET UN TRANSFERT SÉCURISÉ DE DONNÉES SENSIBLES

(30) Priority: 18.11.2005 NO 20055475
(43) Date of publication of application: 13.08.2008
(73) Proprietor: Webpharma Spt AS, 0155 Oslo (NO)
(72) Inventor: ENGEBRETSEN, Jan, Erik, N-1476 Rasta (NO)
(74) Representative: Zacco Norway AS
(86) International application number: PCT/NO2006/000417
(87) International publication number: WO 2007/058542

(56) References cited:
- WO-A1-01/71522
- WO-A2-2004/109967
- US-A- 6 047 259
- US-A1- 2002 184 451
- US-A1- 2003 182 438

## Description

The present invention is generally related to a method, system and devices for secure data capture and transfer of sensitive data. In particular, the present invention is related to a method, system and devices for secure capture of sensitive data such as personal data, patient journals, business secrets etc. in a local client computer and then a secure transfer of such sensitive data from said client computer over a network, including public networks, to a server computer.

Due to the risk of unauthorised access, systems processing sensitive data (i.e. personal data, patient journals or business secrets) are often not allowed to be connected to external networks on permanent basis, such as the Internet. Securities measures such as traditional firewalls and encryption are known in prior art, but are usually expensive solutions, and may still be subject to infringement, for example by key logger programs etc. Big corporate businesses and government may of course provide the best and most expensive solutions to these problems. However, communication as such needs two parties to be possible. If the parties belong to the same organization, there is usually no problem in providing secure network connections. However, small businesses such as for example a medical office comprising a few doctors may not have the necessary technical skill and financial resources available to provide a secure network connection, for example to send prescriptions to a pharmacy, even though the pharmacy itself may belong to a corporate chain of pharmacies having the possibilities to provide the technical solution for secure communication on its side of the connection. Therefore, Data Messages related to sensitive data (text, pictures, videos etc.) intended for external use are often written and communicated as paper based documents only.

For example, in the health service and especially in the primary health service patient health information and drug prescriptions are examples of Data Messages which must be treated with a high degree of security. Most countries have laws, regulations and regulatory authorities protecting the handling, communication and use of such data, and especially when such data are in computer readable form.

Today, drug prescriptions are normally written on paper and handed over by the prescribing person (i.e. a doctor) directly to the patient. In some cases the prescription is sent by telefax or given orally by telephone message directly to a person in the pharmacy or to an answering machine service at the pharmacy. All three methods provide a security level acceptable to most national health authorities. The efficiency is not optimal, since most prescribers today uses a computer-based patient journal system. Due to the risk of unauthorised access to the patient journal system, these systems are normally not connected to an external telecommunications network, let alone connected to an open system like the Internet.

Most vendors of computer-based Patient Journal Systems offer an e-prescription functionality in newer versions of their software. Such new functionality is an advantage in such systems for both doctors and patient since an electronic version of prescriptions provide a more correct recording and issue of prescriptions, and therefore the amount of drugs, renewals of prescriptions etc. that may be managed in a much safer manner than previously possible with paper based systems.

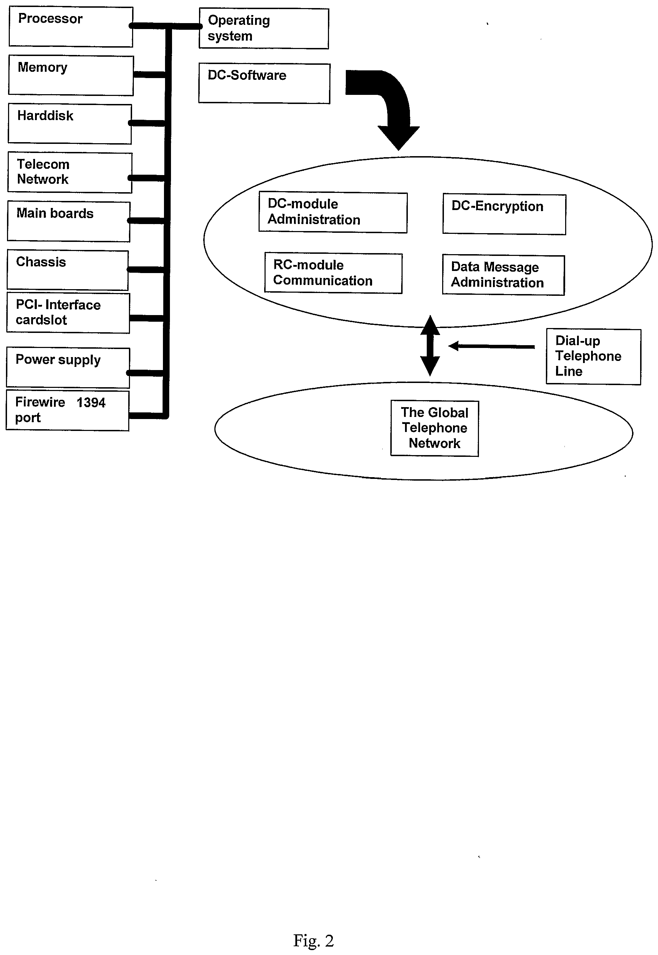

US 6,047,259 describe an interactive method and system for managing physical exam, diagnoses and treatment protocols in a healthcare practice. Figure 2 in this disclosure depicts a typical lay-out of computer systems and communication infrastructure as found in a typical healthcare facility, such as a hospital. There is a reception 230, surgery treatment 236, examination room 234, laboratory 238 and a pharmacy 240 that all are interconnected in a local Ethernet system. The local interconnection provides fast and secure interconnection of the different computer systems at the different stations of the healthcare establishment. In addition, there is a computer 202 connected via a modem 256 that can provide communication over a telephone network 224 to a central computer system 220. The central computer system 220 acts as the central computer for several hospitals. The central computer periodically dials up the server via the telephone network 224 and obtains a copy of the hospital's data. However, as known to a person skilled in the art, the public telephone network 224 and the modem 226 pose a security risk if there is no encryption or other means of disguising the data transferred on the public network. This aspect is not part of the teaching of US 6,047,259, and it is therefore an assumption of using the teaching of this patent that the person skilled in the art provides as security solution for the telephone network. The Ethernet 218 in figure 2 provides a local interconnection system for the local computers in the hospital. This Ethernet and the interconnected computer systems can be protected by a fire wall in the computer system 202 as known to a person skilled in the art. According to the teaching of US 6,047,259 the pharmacy computer system 216 is connected to the local Ethernet system behind a fire wall system implemented in the external gateway computer system 202. The main purpose of the pharmacy computer system 216 in this teaching is to provide correct labels for medicines given to patients. The labels are printed on the printer 242 connected to the pharmacy computer 216.

Network security and secure network access protocols are of major concerns for every one that is working with computer communication. For example, the Internet engineering task force (IETF) is a large open international community of network designers, operators, etc., that are concerned with the evolution of the Internet architecture. One of their proposals is the RFC 2881 titled "Network access server requirements for next generation (NASREQNG) NAS model". According to the teaching publication, it is many proposals for how network communication can be secured through notification, accounting, and transaction surveillance. However, these solutions require highly sophisticated and expensive infrastructures to achieve the security goal of the system.

However, the problem of secure communication still requires a more cost-efficient solution than commercially available today. The most widely used method in prior art for providing a secure network solution is the so called VPN (Virtual Private Network). Applied to an e-prescription system, the VPN requires a closed communication subnetwork to be established between the involved parties i.e. the prescribers and all the pharmacies. Several pilot projects have been reported from a number of countries, Norway included, using VPN or similar commercial solutions. Full-scale implementation has not occurred and is anticipated to be slow, due to the high costs, and the need for change and upgrade of existing systems, both the client computer system run by a prescriber, and also at the receiving computer system located for example at a pharmacy.

Therefore there is a need for a simpler and cheaper solution to secure data capture and transfer of sensitive data, such as prescriptions for example, between a client computer and a server computer.

US2003/0182438 discloses methods and systems for the provision of printing services comprising a spooling server used to store a print job received from a network from a print job source; a printer polling device polls the spooling server via the network to determine whether any print jobs associated with the printer polling device are available for printing.

The present invention provides a method for communicating data messages from at least one first access point to at least one second access point in a network, comprising public networks, wherein said at least one first access point and said at least one second access point, in addition to network ports, each respectively provides a communication port for connecting computer systems or computer related components to each of said access points, comprising the steps recited in the accompanying patent claim 1.

Features of embodiments of the method of the invention according to claim 1 are recited in the accompanying patent claims 2-17.

The present invention provides a system for communicating data messages from at least one first access point to at least one second access point in a network, comprising public networks, wherein said at least one first access point and said at least one second access point, in addition to network ports, each respectively comprise a communication port for connecting computer systems or computer related components to each of said access points, comprising the features recited in the accompanying patent claim 18.

Features of embodiments of the system of the invention according to claim 18 are recited in the accompanying patent claims 19 - 36.

Features of a device for a first access point and of a device for a second access point, to be used in a system according to claim 18, are recited in the accompanying patent claims 37 and 38, respectively.

According to an aspect of the present invention, the necessary level of security for the client computer and the server computer is acquired by dividing communications between parties into two individual and independent processes:
a) a Data Capture module (DC module) in communication with a client computer characterized by that the only direction of communication possible between the data capture module and the client computer is from the client computer to the data capture module, and
b) a Reception Control module (RC module) in communication with a server computer characterized by that the RC module is the only part of the solution
according to the present invention that can read data from the DC module. According to an example of embodiment of the present invention, a DC module resides at the prescriber's office while a RC module resides at a central server computer system serving all or a subgroup of pharmacies, or individual pharmacies. According to the characteristics of the DC and RC module, the DC module cannot access the computer based journal system it serves. It is only the journal system in the client computer that can write data to the DC module. Secondly, the DC module cannot access the RC module. It is only the RC-module that can read data from the DC-modules it controls.

Generally, the present invention is related to a method, system and devices providing communication of Data Messages from at least one first access point to at least one second access point, in a network, in such a manner that the only allowable direction of transfer of said Data Messages is from said at least one first access point to said at least one second access point.

According to yet another aspect of the present invention, DC and RC modules may be implemented as separate devices comprising computing elements such as microprocessors, microcontrollers etc. running embedded software executing steps of a method according to the present invention. In alternative embodiments, software components providing execution of steps of a method according to the present invention may be running as software programs in said client and/or server computer systems, respectively. In other examples of embodiments of the present invention, parts of a method according to the present invention may be implemented as embedded software in an attached device communicating with software programs running in a client computer running other parts of said method according to the present invention constituting a DC module, or in a server computer constituting a RC module, respectively.
Figure 1 depicts an example of embodiment of a system according to the present invention.
Figure 2 illustrates different functional units of a DC module according to the present invention.
Figure 3 illustrates different functional units of a RC module according to the present invention.
Figure 4 illustrates steps of a method according to the present invention.

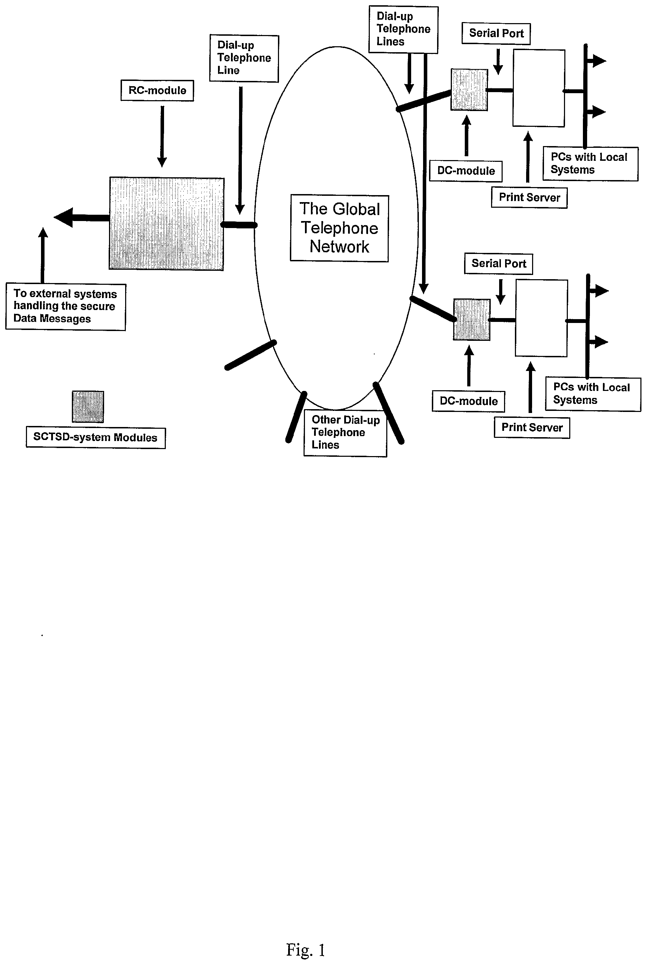

An example of embodiment of a system according to the present invention in depicted in figure 1. A plurality of DC modules (depicted in figure 2) according to the present invention are located geographically dispersed, for example at medical offices. In this example, each of said plurality of DC modules is connected to a public telephone network. In an example of embodiment of a DC module according to the present invention, it comprises a modem as known to a person skilled in the art, facilitating communication over the public telephone network. At the different medical offices, several client computers may communicate with each other via a local area network (LAN). As depicted in the example in figure 1, the DC module is part of the LAN at the medical office and is identified in the LAN as a print server. That is, according to this example of embodiment of the present invention, whenever a doctor on the LAN network at the medical office wants to send a prescription to a pharmacy, he directs a printing of said prescription to said print server which in its turn communicates with the DC module, which is storing the printed prescription in a local memory. The connection between the Print server and the DC module may be via a serial port, a parallel port, USB port etc. in the Print Server as known to a person skilled in the art. However, in an example of embodiment of the present invention, a serial port is used and the Tx (transmit), Rx (receive) cable connection from the DC module to the Print Server is omitted in the cable, thereby providing a physical obstacle for communications from the DC module to the Print Server, and then onto the LAN from the Public Telephone Network (provided just as an example) via the DC Print Server connection.

In case of other interconnection solutions between the DC module and the Printer Server, for example via an USB port, an USB controller in the DC module may be programmed to stop any data communication from the public network side onto the USB port, as known to a person skilled in the art. A more detailed description of the DC module is provided below.

In the example of embodiment illustrated in figure 1, an RC-module according to the present invention comprises a server computer system with specialised software. This RC-module can be located at any location with for example dial-up access. The RC-module is programmed to contact the DC-modules it controls via for example the RC-modules' dial-up connection. The RC-module transfers all unread Data Messages stored in each DC-module, and can handle an unlimited number of DC-modules. According to an example of embodiment of a RC-module according to the present invention, the RC-module performs a round robin search according to an updated list of for example telephone numbers of modems connected to DC-modules at prescribers offices. Thereby, any prescription downloaded to a corresponding DC-module connected to the doctors PC will be read by the RC module inside a controllable time window. The length of the time window is dependent on the number of DC-modules the present RC module controls, and the repetition rate for the round robin search. According to an aspect of the present invention, a prescription sent from a medical office may be guarantied to reach a pharmacy of choice within a time limit. The RC module according to the present invention is described in greater detail below.

According to an example of embodiment of a RC module according to the present invention, the RC module comprise a database comprising records about DC modules and their respective connection onto a communication network such as the public telephone network. Each record identifying a DC module comprise information such as telephone numbers of modems connecting DC modules or IP addresses in case DC modules are connected to the Internet. Whenever a RC module performs a round robin search, the database records provides the RC module with information regarding connection specific procedures to be run in the RC module or server computer to establish a connection with a specific DC module to be able to read Data Messages stored in said DC module and transferred to the server computer for further data processing.

According to an example of embodiment of a system according to the present invention, each DC module may store a plurality of Data Messages, wherein each Data Message may comprise an Identification of a destination for the Data Message at hand. For example, each pharmacy served by the present RC module may be identified by a unique number or address field assigned to each pharmacy. When the RC module has performed a round robin search, the RC module may parse all the Data Messages to identify each pharmacy to receive the prescriptions, for example via a VPN connecting the pharmacies.

According to yet another example of embodiment of a system according to the present invention, pharmacies may locate a local RC-module at each pharmacy's premises serving only the local pharmacy as described above. According to an aspect of the present invention, there is no need for a VPN between the pharmacies. Any communication of sensitive data between pharmacies may be communicated according to a method and system according to the present invention. Pharmacies comprising a RC module targeted towards other pharmacies may run a round robin search collecting information from the other pharmacies listed in said RC module, where the delivery of a Data Message may be guarantied to happen inside a defined time period of the system as described above. Pharmacies providing said Data Message to the other pharmacies may do so through a DC module according to the present invention.

According to yet another aspect of the present invention, duplex communication may be achieved between a prescriber's office and a pharmacy, by providing a DC module at the pharmacy and a corresponding RC module at the prescriber's office. Each communication direction is independent, and none of the communication paths provide a direct access to the patient journal system at neither the prescriber's office, nor any form of direct access to the server at the pharmacy side of the communication. Therefore, secure duplex communication is possible according to an example of embodiment of the present invention comprising a DC, RC pair of modules at each communicating parties locations.

According to another example of embodiment of a system according to the present invention, Data Messages transferred between the RC-module and each DC-module may be encrypted, as known to a person skilled in the art.

An example of embodiment as illustrated in figure 2 of a DC module according to the present invention may comprise:
- Chassis
- Power Supplies
- Main boards
- Processors
- Memory
- Encryption unit
- DC Software
- Fire wire 1394 port
- PCI Interface card slot comprising network interface

As known to a person skilled in the art, all the listed components above may be standard elements as found in many examples of commercially available instrumentation systems, or even in a standard complete Personal Computer (PC) systems. However, the DC Software provides execution of the steps according to a method according to the present invention, thereby providing the functionality of a DC module according to the present invention.

The example of DC-module as depicted in figure 2 provides interfaces with international standards through serial, parallel and USB ports, for example which is facilitating connections to other equipment, for example a Print Server as depicted in figure 1. A modem connection to a public telephone network may be provided in the DC module in figure 2, for example as a PCI card. Other types of PCI cards may be installed providing connections to ISDN, ADSL, wireless connections, etc.

The special DC-module software secures the system according to the present invention from unauthorised access via the DC-module. It controls the ports and communication interfaces preventing the DC-module to connect back to the data system containing the sensitive Data Messages.

The encryption unit encrypts the data sent from the user system.

It is possible to add functionality (increased speed and capacity, special interfaces) to the system using the PCI card slot.

The DC Software comprises the following software components according to an example of embodiment of the present invention:
- DC-Administration
- RC-module Communication
- DC-encryption
- Data Message Administration

According to an example of embodiment of the present invention, the DC-Administration controls the ports, passwords and the on/off status of the encryption and prevents unauthorised access to, and change of, the Data Messages.

According to an example of embodiment of the present invention, the RC-module Communication handles the communication with the RC- module, i.e. receives the dial-up request for example from a RC-module.

According to an example of embodiment of the present invention, the DC-encryption unit encrypts Data Messages transferred from the system handling the sensitive Data Messages.

According to an example of embodiment of the present invention, the Data Message Administration unit handles the storage of Data Messages transferred from the system processing the sensitive Data Messages (Patient Journal System, for example) and deletes these messages in the DC-module after the RC-module has read the Data Messages.
According to an example of embodiment of the present invention, the DC-module is recognised as a printer seen by the data system processing the sensitive Data Messages. The user writes the document to the DC-module in the same way as he/she normally would select a printer. The DC-module receives all data (text, pictures, and video), encrypt the data and wait for the RC-module to read the data.

According to an example of embodiment of the present invention, e-prescription solutions as provided by vendors of commercial Patient Journal Systems may be interfaced with a system according to the present invention in a simple manner. If the commercial Patient Journal System provides a prescription system based on standard e-mail solutions the prescription is sent as an email from the doctor to the pharmacy, and the computer system at the doctor's office may comprise a DC module trapping all communications intended for Internet. This may be achieved with a DC-module comprising an Ethernet controller programmed to do the trapping as required. In yet another example of embodiment of the present invention, the computer system at the doctor's location may comprise a SLIP (Serial Line IP Protocol), or PPP (Point to Point Protocol) as known to a person skilled in the art providing an Internet solution on, for example, RS232 ports in the computer. In this manner, a DC module originally configured as a print server as described above may be reprogrammed to receive IP Data Messages on the same serial line, as known to a person skilled in the art.

In yet another example of embodiment of the present invention, the DC-module is provided as a normal printer definition in the operating system. By selecting this printer as the printer for the Patient Journal System, any printed material, including printing of prescriptions, is rerouted to the DC-module according to the present invention.
The Patient Journal System recognizes the DC-module as a normal printer. The doctor has to actively choose the DC-module as "printer" if he/she wants to transfer the prescription to the pharmacy (or the neutral trusted third party). The DC-module electronically stores the prescriptions and encrypts them. The RC-module can handle an unlimited number of DC-modules. The RC module transfers all unread documents stored in the DC-module via the dial-up line, decrypts the prescriptions, and present them as clear text message at the pharmacy. The memory of the DC-module is erased after this transaction. The number and times such transactions takes place in each DC-module can be selected individually from the RC-module.

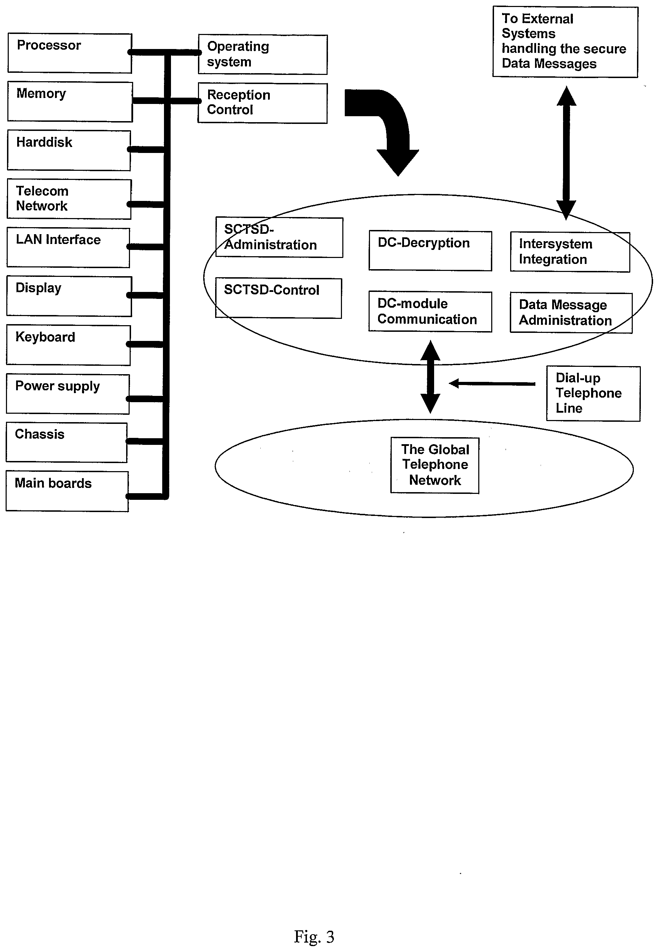

A RC-module according to an example of embodiment of the present invention, is illustrated in figure 3 comprising the following units:
- Processor
- Memory
- Hard disk
- Telecom Network Interface
- Local Area Network Interface
- Display
- Keyboard
- Power Supply
- Chassis
- Operating System
- Reception Control Software

As known to a person skilled in the art, all the listed components above may be standard elements as found in many examples of commercially available instrumentation systems, or even in a standard complete Personal Computer (PC) system. However, the RC Software provides execution of the steps according to a method according to the present invention, thereby providing the functionality of a RC module according to the present invention.

The Reception Control Software is shown in figure 3 and comprises the following software components, according to an example of embodiment of the present invention:
- RC-Administration
- RC-Control
- DC-module Communication
- DC-Decryption
- Intersystem Integration
- Data Message Administration

According to an example of embodiment of the present invention, the RC-Administration unit administer the DC-module parameters. The unit manages parameters such as the identity and geographical location of each DC-module, their unique identity name, their dial-up telecom network line number, and the schedule by which each DC-module is contacted in order to transfer Data Messages from the DC-module to the RC-module.

According to an example of embodiment of the present invention, the RC-Control unit controls the process of calling each DC-module (for example by Round Robin search), checking the DC module status, transferring any Data Messages captured since the previous call, etc. The unit also handles the communication with the external system which is the recipient of the Data Messages captured.

According to an example of embodiment of the present invention, the DC-Decryption unit decrypts Data Messages from the DC-modules.

According to an example of embodiment of the present invention, the Intersystem Integration unit facilitates integration between the RC-module and the external system(s) handling the Data Messages received from the DC-modules. These system(s) could even be another RC-module controlling a different set of DC-modules, or a central RC-module controlling a set of RC-modules with a domain of underlying DC-modules.

According to an example of embodiment of the present invention, the Data Message Administration unit controls the transfer of Data Messages to the external system(s) handling the Data Messages.

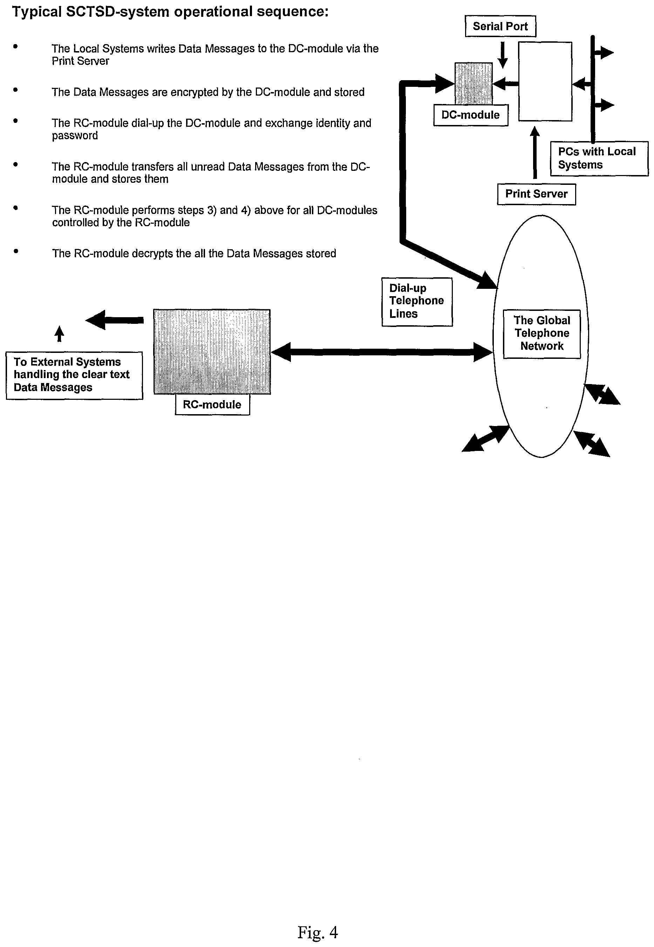

Figure 4 illustrates steps of a method according to the present invention providing secure capture and transfer of drug prescriptions. The system employing the method according to the present invention comprises a number of DC-modules located in clinics of a plurality of doctors and dentists. They prescribe drugs to the patients they treat. In this example, the DC-modules are connected to a standard serial port of a print server in the clinic. Thus all PCs connected to the LAN in the clinic can access the DC-module and transfer prescriptions.

In this example, each DC-module is connected to a dial-up line in the clinic's telephone system, and an authentication process is started by exchange of identity and password.

In this example, the RC-module is located in the pharmacy responsible for handling the drug prescriptions. The module is connected to the pharmacy's telephone system via a dial-up line and via the pharmacy's LAN to the internal data system of the pharmacy, normally used for the daily handling of selling drugs to customers visiting the pharmacy (both with and without prescriptions), internet ordering from professional customers, invoicing, ordering from the drug vendors, and handling of drugs in stock at the pharmacy.

During a normal working day the doctors and dentists will prescribe drugs and writing the prescription to their local DC-module.

The RC-module will at predefined time intervals use the dial-up telephone line to call each DC-module using their specific telephone number. After performing the authentication procedure, the RC-module will then transfer all the prescriptions (Data Messages) located in each DC-module, decrypt the Data Messages and transfer the prescriptions to the pharmacy's data systems for normal handling according to the laws and regulations for drug prescriptions. The prescription can be printed on paper for filing purposes if necessary.

When additional clinics and prescribers want to become operational using the DC-modules, the RC-module is updated by the pharmacy staff with the necessary parameters.

According to an aspect of the present invention, it is not possible for other than the users of the Local System(s) to write Data Messages to a DC-module connected to the local Print Server for these systems. According to another embodiment of the present invention, it is not possible to manipulate the Data Message when said Data Message has been transmitted to the DC-module. The DC-module can only be written to from these local system(s), the RC-module can only read from the DC-modules, and the Data Messages can be encrypted in the DC-module and decrypted by the RC-module. It is therefore, for all practical purposes, not possible for a third party to transfer, change or even read the Data Messages captured and transferred in the a system according to the present invention.

An application of a system according to the present invention used for drug prescription, provides the RC-system is placed together with the pharmacy's Internet based ordering system. This design is authorised by NAF-Data, the Norwegian vendor of the Farmapro Pharmacy Data System used by almost all Norwegian pharmacies.

According to this example of application of the present invention, the RC-module connects at least once a day with the DC-modules connected to the Local System(s). A third party intruder would have to know the dial-up telephone number of the DC-module to get access to a DC-module, its identification name and password, and the detailed communication procedure. Such access by an intruder would only be possible by an unfaithful servant in the organisation where the RC-module is located. The RC-module is logging all transactions. Intruders accessing will therefore easily be detected. Obviously it is not possible to get access to Local System(s) via the RC-module and a specific DC-module, since only one-way communication in these modules is possible, respectively.

A system according to the present invention when used for handling drug prescriptions, is considerably more secure compared to a solution where the patient journal system runs on a computer system connected directly to an external communication network.

Since the size of any drug prescription is small measured in number of characters, data transfer between the DC-module and RC-module can be encrypted with a high level of security, and a number of encryptions keys can be utilised.

Irrespective of the specific application the system according to the present system, any application may comprise procedures for the necessary authentication; the Data Message can be tracked to the Local System(s), and therefore also to the user if the user logs onto the Local System(s) using a unique name and a secret password.

Other important requirements on Content Security is obvious from the method according to the present invention, as described above, since it is extremely difficult to gain access to the Data Message, interpret and change it before it is used as a clear text version of a particular prescription.

## Claims

1. Method for communicating Data Messages from at least one first module to a second module in a network, comprising public networks, wherein said at least one first module and said second module, in addition to network ports, each respectively provides a communication port for connecting a first and a second computer to said first and second modules, respectively, wherein the second module is the only element that can read the Data Messages from the at least one first module; said method comprises the steps of:
providing a first storage location in said at least one first module in communication with said communication port of said at least one first module such that said first storage location receives said Data Messages in a communication direction from said communication port to said storage location, wherein the communication direction is fixed such that said Data Messages can only be transmitted from the first computer via said communication port to the first storage location in said at least one first module,
utilizing the second computer connected to said second module, at predefined time intervals to read said Data Messages stored in said first storage location in said at least one first module over said network and storing said transferred Data Messages in a second storage location in said second module, wherein said second storage location may be accessed by the second computer via said communication port of said second module.

2. Method according to claim 1, wherein said Data Messages comprise information of source of a Data Message and information about a destination of a Data Message.

3. Method according to claim 1 and 2, wherein said Data Messages are transferred from said second storage location via said communication port to the second computer interpreting said information of source and destination related to said Data Messages, and transferring Data Messages to said destinations over a network or via other relevant means, if necessary.

4. Method according to claim 1, wherein said at least one second module is in communication, via said communication port, with a data base providing information about a plurality of first access points that may comprise Data Messages to be transferred, and on basis of this information, performing a search via said at least one second module contacting each of said first access points comprising possible Data Messages to be transferred to said at least one second access point.

5. Method according to claim 1, wherein said at least one first module comprise a client computer system processing sensitive data, and said at least one second module comprise a server computer system receiving sensitive data from said client computer system over said network.

6. Method according to claim 1, wherein said at least one second t module comprise a client computer system processing sensitive data, and said at least one first module comprise a server computer system receiving sensitive data from said client computer system over said network.

7. Method according to claim 5 or 6, wherein said sensitive data are related to Patient Journal Systems and said Data Messages are prescriptions sent over said network from a medical office to a pharmacy.

8. Method according to claim 1, wherein said at least one first module and said at least one second module comprise network ports for connecting said access points to a public telephone network.

9. Method according to claim 1, wherein said communication port of said at least one first module comprise a LAN port providing access to said first storage location from a plurality of computer systems connected to said LAN.

10. Method according to claim 1, wherein said communication port of said at least one first module comprise an RS232 port for connecting a computer system via a serial line.

11. Method according to claim 10, comprising the additional step of removing a Dx Tx signal connection in a cable from said communication port to said computer system.

12. Method according to claim 10, wherein said communication port provides SLIP (Serial Line Internet Protocol) communication limited to transfer of data in a direction from said computer system to said at least one first module.

13. Method according to claim 10, wherein said communication port provides PPP (Point to Point Protocol) communication limited to transfer of data in a direction from said computer system to said at least one first module.

14. Method according to claim 1, wherein said communication port of said at least one first module provides USB (Universal Serial Buss) communication limited to transfer of data in a direction from said computer system to said at least one first module.

15. Method according to claim 10, wherein said communication port of said at least one first module provides serial or parallel communication limited to transfer of data in a direction from said computer system to said at least one first module.

16. Method according to claim 1, wherein said computer system or computer related component connected to said communication port of said at least one first module is a Print Server.

17. Method according to any of the above claims, wherein said at least one first module and said second module are associated with Data Messages comprising medicine prescriptions, medical offices and pharmacies, respectively.

18. System for communicating Data Messages from at least one first module to a second module in a network, comprising public networks, wherein said at least one first module and said second module, in addition to network ports, each respectively comprise a communication port for connecting a first and second computer to said first and second modules, respectively, wherein the second module is the only element that can read the Data Messages from the at least one first module; said system further comprise:
a first storage location in said at least one first module having data signal lines passed to said communication port of said at least one first module arranged such that said first storage location can only receive signals on said data lines in a communication direction from the first computer via said communication port to said storage location,
a second storage location in said second module having data signal lines passed to said communication port of said second module arranged such that said second storage location can deliver signals on said data lines in a communication direction from said storage location to said communication port,
in the second computer associated with said second module, a program stored in the second module that at predefined time intervals transfers Data Messages stored in said first storage location in said at least one first module to said second storage location in said second module, wherein said second storage location may be accessed by the second computer via said communication port of the second module.

19. System according to claim 18, further comprising Data Messages providing information of source of a Data Message and information about a destination of a Data Message.

20. System according to claim 18 and 19, wherein the second computer associated with said at least second module further comprise routines transmitting received Data Messages to destinations of said Data Messages over a network or via another relevant means.

21. System according to claim 18, wherein said computer system or computer related component associated with said at least one second module further comprise a database providing information about a plurality of first access points that may be storing Data Messages to be transferred, and on basis of this information, performing a search via said at least one second module contacting each of said first module comprising possible Data Messages to be transferred to said at least one second module.

22. System according to claim 18, wherein said at least one first module comprise a client computer system processing sensitive data, and said at least one second module comprise a server computer system receiving sensitive data from said client computer system over said network.

23. System according to claim 18, wherein said at least one second t module comprise a client computer system processing sensitive data, and said at least one first module comprise a server computer system receiving sensitive data from said client computer system over said network.

24. Method according to claim 22 or 23, wherein said sensitive data are related to Patient Journal Systems and said Data Messages are prescriptions sent over said network from a medical office to a pharmacy.

25. System according to claim 18, further comprising network ports in said at least one first module and said at least one second module providing access to public telephone networks.

26. System according to claim 18, comprising a LAN port as said communication port of said at least one first module.

27. System according to claim 18, comprising an RS232 port as said communication port of said at least one first module.

28. System according to claim 27, comprising an RS232 cable connected from said communication port to said computer, wherein a Dx Tx signal connection in said cable from said communication port to said computer is removed.

29. System according to claim 27, wherein said communication port provides SLIP (Serial Line Internet Protocol) communication limited to transfer of data in a direction from said computer to said at least one first module.

30. System according to claim 27, wherein said communication port provides PPP (Point to Point Protocol) communication limited to transfer of data in a direction from said computer system to said at least one first module.

31. System according to claim 18, wherein said communication port of said at least one first module provides USB (Universal Serial Buss) communication limited to transfer of data in a direction from said computer system to said at least one first module.

32. System according to claim 10, wherein said communication port of said at least one first module provides serial or parallel communication limited to transfer of data in a direction from said computer system to said at least one first module.

33. System according to claim 18, wherein said computer system or computer related component connected to said communication port of said at least one first module is a Print Server.

34. System according to any of the above claims 18 - 33, wherein said at least one first module and said at least one second module are associated with Data Messages comprising medicine prescriptions, medical offices and pharmacies, respectively.

35. System according to claim 18, further comprising an encryption unit comprised in said at least one first module encrypting said Data Messages store in said first storage location.

36. System according to claim 18, further comprising a decryption unit comprised in said at least one second module decrypting said Data Messages store in said second storage location.

37. Device for a first module to be used in a system according to claim 18, comprising:
• chassis
• power supplies
• main board
• processor
• memory
• encryption unit
• software executed in said processor performing steps of a method according to claim 1
• fire wire 1394 port
• PCI Interface card slot comprising network interface

38. Device for a second module to be used in a system according to claim 18, comprising:
• chassis
• power supplies
• main board
• processor
• memory
• decryption unit
• software executed in said processor performing steps of a method according to claim 1
• fire wire 1394 port
• PCI Interface card slot comprising network interface

## Patentansprüche

1. Verfahren zum Übermitteln von Datennachrichten von mindestens einem ersten Modul an ein zweites Modul in einem Netzwerk, umfassend öffentliche Netzwerke, wobei das mindestens eine erste Modul und das zweite Modul zusätzlich zu Netzwerkports jedes jeweils einen Kommunikationsport zum Verbinden eines ersten und eines zweiten Computers mit dem jeweils ersten und zweiten Modul bereitstellt, wobei das zweite Modul das einzige Element ist, das die Datennachrichten aus dem mindestens einen ersten Modul lesen kann; wobei das Verfahren die folgenden Schritte umfasst:
Bereitstellen eines ersten Speicherortes in dem mindestens einen ersten Modul in Kommunikation mit dem Kommunikationsport des mindestens einen ersten Moduls, sodass der erste Speicherort die Datennachrichten in einer Kommunikationsrichtung von dem Kommunikationsport zu dem Speicherort empfängt, wobei die Kommunikationsrichtung derart festgelegt wird, dass die Datennachrichten ausschließlich von dem ersten Computer über den Kommunikationsanschluss an den ersten Speicherort in dem mindestens einen ersten Modul übertragen werden können,
Benutzen des zweiten Computers, der mit dem zweiten Modul verbunden ist, in vordefinierten Zeitintervallen, um die in dem ersten Speicherort gespeicherten Datennachrichten in dem mindestens einen ersten Modul über das Netzwerk zu lesen, und Speichern der übertragenen Datennachrichten in einem zweiten Speicherort in dem zweiten Modul, wobei auf den zweiten Speicherort von dem zweiten Computer über den Kommunikationsport des zweiten Moduls zugegriffen werden kann.

2. Verfahren nach Anspruch 1, wobei die Datennachrichten Quelleninformationen einer Datennachricht und Informationen über ein Ziel einer Datennachricht umfassen.

3. Verfahren nach Anspruch 1 und 2, wobei die Datennachrichten von dem zweiten Speicherort über den Kommunikationsport an den zweiten Computer übertragen werden, der die Quellen- und Zielinformationen in Bezug auf die Datennachrichten interpretiert und gegebenenfalls Datennachrichten an die Ziele über ein Netzwerk oder über andere relevante Mittel überträgt.

4. Verfahren nach Anspruch 1, wobei das mindestens eine zweite Modul über den Kommunikationsport mit einer Datenbank kommuniziert, die Informationen über eine Mehrzahl erster Zugriffspunkte bereitstellt, die Datennachrichten umfassen können, die übertragen werden sollen, und auf Grundlage dieser Informationen eine Suche über das mindestens eine zweite Modul durchführt, das jeden der ersten Zugriffspunkte kontaktiert, die mögliche Datennachrichten umfassen, die an den mindestens einen zweiten Zugriffspunkt übertragen werden sollen.

5. Verfahren nach Anspruch 1, wobei das mindestens eine erste Modul ein Client-Computersystem umfasst, das sensible Daten verarbeitet, und das mindestens eine zweite Modul ein Server-Computersystem umfasst, das sensible Daten von dem Client-Computersystem über das Netzwerk empfängt.

6. Verfahren nach Anspruch 1, wobei das mindestens eine zweite Modul ein Client-Computersystem umfasst, das sensible Daten verarbeitet, und das mindestens eine erste Modul ein Server-Computersystem umfasst, das sensible Daten von dem Client-Computersystem über das Netzwerk empfängt.

7. Verfahren nach Anspruch 5 oder 6, wobei die sensiblen Daten mit Patiententagebuchsystemen in Beziehung stehen und die Datennachrichten Rezepte sind, die über das Netzwerk von einer Arztpraxis an eine Apotheke gesendet werden.

8. Verfahren nach Anspruch 1, wobei das mindestens eine erste Modul und das mindestens eine zweite Modul Netzwerkports zum Verbinden der Zugriffspunkte mit einem öffentlichen Telefonnetzwerk umfassen.

9. Verfahren nach Anspruch 1, wobei der Kommunikationsport des mindestens einen ersten Moduls einen LAN-Port umfasst, der Zugriff auf den ersten Speicherort von einer Mehrzahl von Computersystemen, die mit dem LAN verbunden sind, bereitstellt.

10. Verfahren nach Anspruch 1, wobei der Kommunikationsport des mindestens einen ersten Moduls einen RS232-Port zum Verbinden eines Computersystems über eine serielle Leitung umfasst.

11. Verfahren nach Anspruch 10, umfassend den zusätzlichen Schritt des Entfernens einer Dx-Tx-Signalverbindung in einem Kabel von dem Kommunikationsport zu dem Computersystem.

12. Verfahren nach Anspruch 10, wobei der Kommunikationsport SLIP(Serial Line Internet Protocol)-Kommunikation bereitstellt, die auf die Übertragung von Daten in einer Richtung von dem Computersystem zu dem mindestens einen ersten Modul beschränkt ist.

13. Verfahren nach Anspruch 10, wobei der Kommunikationsport eine PPP(Point to Point Protocol)-Kommunikation bereitstellt, die auf die Übertragung von Daten in einer Richtung von dem Computersystem zu dem mindestens einen ersten Modul beschränkt ist.

14. Verfahren nach Anspruch 1, wobei der Kommunikationsport des mindestens einen ersten Moduls eine USB(Universal Serial Bus)-Kommunikation bereitstellt, die auf die Übertragung von Daten in einer Richtung von dem Computersystem zu dem mindestens einen ersten Modul beschränkt ist.

15. Verfahren nach Anspruch 10, wobei der Kommunikationsport des mindestens einen ersten Moduls serielle oder parallele Kommunikation bereitstellt, die auf die Übertragung von Daten in einer Richtung von dem Computersystem zu dem mindestens einen ersten Modul beschränkt ist.

16. Verfahren nach Anspruch 1, wobei das Computersystem oder die computerbezogene Komponente, die mit dem Kommunikationsport des mindestens einen ersten Moduls verbunden ist, ein Druckserver ist.

17. Verfahren nach einem der vorstehenden Ansprüche, wobei das mindestens eine erste Modul und das zweite Modul Datennachrichten zugeordnet sind, die jeweils Medikamentenrezepte, Arztpraxen und Apotheken umfassen.

18. System zum Übermitteln von Datennachrichten von mindestens einem ersten Modul an ein zweites Modul in einem Netzwerk, umfassend öffentliche Netzwerke, wobei das mindestens eine erste Modul und das zweite Modul zusätzlich zu Netzwerkports jedes jeweils einen Kommunikationsport zum Verbinden eines ersten und zweiten Computers mit jeweils dem ersten und zweiten Modul bereitstellt, wobei das zweite Modul das einzige Element ist, das die Datennachrichten aus dem mindestens einen ersten Modul lesen kann; wobei das System ferner Folgendes umfasst:
einen ersten Speicherort in dem mindestens einen ersten Modul mit Datensignalleitungen, die zum Kommunikationsport des mindestens einen ersten Moduls geführt werden, das derart angeordnet ist, dass der erste Speicherort ausschließlich Signale auf den Datenleitungen in einer Kommunikationsrichtung von dem ersten Computer über den Kommunikationsport zu dem Speicherort empfangen kann,
einen zweiten Speicherort in dem zweiten Modul mit Datensignalleitungen, die zum Kommunikationsport des zweiten Moduls geführt werden, das derart angeordnet ist, dass der zweite Speicherort Signale auf den Datenleitungen in einer Kommunikationsrichtung von dem Speicherort an den Kommunikationsport abgeben kann,
in dem zweiten Computer, der dem zweiten Modul zugeordnet ist, ein Programm, das in dem zweiten Modul gespeichert ist, das in vordefinierten Zeitintervallen Datennachrichten, die in dem ersten Speicherort in dem mindestens einen ersten Modul gespeichert sind, an den zweiten Speicherort in dem zweiten Modul überträgt, wobei von dem zweiten Computer über den Kommunikationsport des zweiten Moduls auf den zweiten Speicherort zugegriffen werden kann.

19. System nach Anspruch 18, ferner umfassend Datennachrichten, die Quelleninformationen einer Datennachricht und Informationen über ein Ziel einer Datennachricht bereitstellen.

20. System nach Anspruch 18 und 19, wobei der zweite Computer, der dem mindestens einen zweiten Modul zugeordnet ist, ferner Routinen umfasst, die empfangene Datennachrichten an Ziele der Datennachrichten über ein Netzwerk oder über andere relevante Mittel überträgt.

21. System nach Anspruch 18, wobei das Computersystem oder die computerbezogene Komponente, die dem mindestens einen zweiten Modul zugeordnet ist, ferner eine Datenbank umfasst, die Informationen über eine Mehrzahl erster Zugriffspunkte bereitstellt, die möglicherweise Datennachrichten speichern können, die übertragen werden sollen, und auf Grundlage dieser Informationen eine Suche über das mindestens eine zweite Modul durchführt, das jedes des ersten Moduls kontaktiert, das mögliche Datennachrichten umfasst, die an das mindestens eine zweite Modul übertragen werden sollen.

22. System nach Anspruch 18, wobei das mindestens eine erste Modul ein Client-Computersystem umfasst, das sensible Daten verarbeitet, und das mindestens eine zweite Modul ein Server-Computersystem umfasst, das sensible Daten von dem Client-Computersystem über das Netzwerk empfängt.

23. System nach Anspruch 18, wobei das mindestens eine zweite Modul ein Client-Computersystem umfasst, das sensible Daten verarbeitet, und das mindestens eine erste Modul ein Server-Computersystem umfasst, das sensible Daten von dem Client-Computersystem über das Netzwerk empfängt.

24. Verfahren nach Anspruch 22 oder 23, wobei die sensiblen Daten mit Patiententagebuchsystemen in Beziehung stehen und die Datennachrichten Rezepte sind, die über das Netzwerk von einer Arztpraxis an eine Apotheke gesendet werden.

25. System nach Anspruch 18, ferner umfassend Netzwerkports in dem mindestens einen ersten Modul und dem mindestens einen zweiten Modul, die Zugriff auf öffentliche Telefonnetzwerke bereitstellen.

26. System nach Anspruch 18, das einen LAN-Port als den Kommunikationsport des mindestens einen ersten Moduls umfasst.

27. System nach Anspruch 18, das einen RS232-Port als den Kommunikationsport des mindestens einen ersten Moduls umfasst.

28. System nach Anspruch 27, das ein RS232-Kabel umfasst, das von dem Kommunikationsport mit dem Computer verbunden ist, wobei eine Dx-Tx-Signalverbindung in dem Kabel von dem Kommunikationsport zu dem Computer entfernt wird.

29. System nach Anspruch 27, wobei der Kommunikationsport SLIP(Serial Line Internet Protocol)-Kommunikation bereitstellt, die auf die Übertragung von Daten in einer Richtung von dem Computer zu dem mindestens einen ersten Modul beschränkt ist.

30. System nach Anspruch 27, wobei der Kommunikationsport PPP(Point to Point Protocol)-Kommunikation bereitstellt, die auf die Übertragung von Daten in einer Richtung von dem Computersystem zu dem mindestens einen ersten Modul beschränkt ist.

31. System nach Anspruch 18, wobei der Kommunikationsport des mindestens einen ersten Moduls eine USB(Universal Serial Bus)-Kommunikation bereitstellt, die auf die Übertragung von Daten in einer Richtung von dem Computersystem zu dem mindestens einen ersten Modul beschränkt ist.

32. System nach Anspruch 10, wobei der Kommunikationsport des mindestens einen ersten Moduls eine serielle oder parallele Kommunikation bereitstellt, die auf die Übertragung von Daten in einer Richtung von dem Computersystem zu dem mindestens einen ersten Modul beschränkt ist.

33. System nach Anspruch 18, wobei das Computersystem oder die computerbezogene Komponente, die mit dem Kommunikationsport des mindestens einen ersten Moduls verbunden ist, ein Druckserver ist.

34. System nach einem der Ansprüche 18 - 33, wobei dem mindestens einen ersten Modul und dem mindestens einen zweiten Modul Datennachrichten zugeordnet sind, die jeweils Medikamentenrezepte, Arztpraxen und Apotheken umfassen.

35. System nach Anspruch 18, das ferner eine Verschlüsselungseinheit umfasst, die in dem mindestens einen ersten Modul, den Datennachrichtenspeicher in dem ersten Speicherort verschlüsselnd, umfasst ist.

36. System nach Anspruch 18, das ferner eine Entschlüsselungseinheit umfasst, die in dem mindestens einen zweiten Modul, den Datennachrichtenspeicher in dem zweiten Speicherort entschlüsselnd, umfasst ist.

37. Vorrichtung für ein erstes Modul, das in einem System nach Anspruch 18 verwendet werden soll, umfassend:
• Gehäuse
• Stromversorgungen
• Hauptplatine
• Prozessor
• Speicher
• Verschlüsselungseinheit
• Software, die in dem Prozessor ausgeführt wird und Schritte eines Verfahrens nach Anspruch 1 durchführt
• Fire Wire 1394-Port
• PCI-Schnittstellen-Kartenschlitz, umfassend Netzwerkschnittstelle

38. Vorrichtung für ein zweites Modul, das in einem System nach Anspruch 18 verwendet werden soll, umfassend:
• Gehäuse
• Stromversorgungen
• Hauptplatine
• Prozessor
• Speicher
• Entschlüsselungseinheit
• Software, die in dem Prozessor ausgeführt wird und Schritte eines Verfahrens nach Anspruch 1 durchführt
• Fire Wire 1394-Port
• PCI-Schnittstellen-Kartenschlitz, umfassend Netzwerkschnittstelle

## Revendications

1. Procédé pour communiquer des messages de données depuis au moins un premier module à un deuxième module dans un réseau, comprenant des réseaux publics, dans lequel ledit au moins un premier module et ledit deuxième module, en plus de ports de réseau, fournissent chacun respectivement un port de communication pour connecter un premier et un deuxième ordinateur auxdits premier et deuxième modules, respectivement, dans lequel le deuxième module est le seul élément qui peut lire les messages de données provenant de l'au moins un premier module ; ledit procédé comprend les étapes consistant à :
fournir un premier emplacement de stockage dans ledit au moins un premier module en communication avec ledit port de communication dudit au moins un premier module de telle sorte que ledit premier emplacement de stockage reçoit lesdits messages de données dans une direction de communication allant dudit port de communication audit emplacement de stockage, dans lequel la direction de communication est fixée de telle sorte que lesdits messages de données peuvent seulement être transmis à partir du premier ordinateur via ledit port de communication vers le premier emplacement de stockage dans ledit au moins un premier module,
utiliser le deuxième ordinateur connecté audit deuxième module, à des intervalles de temps prédéfinis pour lire lesdits messages de données stockés dans ledit premier emplacement de stockage dans ledit au moins un premier module sur ledit réseau et stocker lesdits messages de données transférés dans un deuxième emplacement de stockage dans ledit deuxième module, dans lequel ledit deuxième emplacement de stockage est accessible par le deuxième ordinateur via ledit port de communication dudit deuxième module.

2. Procédé selon la revendication 1, dans lequel lesdits messages de données comprennent des informations de source d'un message de données et des informations concernant une destination d'un message de données.

3. Procédé selon la revendication 1 et 2, dans lequel lesdits messages de données sont transférés depuis ledit deuxième emplacement de stockage via ledit port de communication vers le deuxième ordinateur interprétant lesdites informations de source et de destination se rapportant auxdits messages de données, et transférant des messages de données auxdites destinations sur un réseau ou via d'autres moyens pertinents, au besoin.

4. Procédé selon la revendication 1, dans lequel ledit au moins un deuxième module est en communication, via ledit port de communication, avec une base de données fournissant des informations concernant une pluralité de premiers points d'accès qui peuvent comprendre des messages de données destinés à être transférés, et sur la base de ces informations, met en oeuvre une recherche via ledit au moins un deuxième module contactant chacun desdits premiers points d'accès comprenant des messages de données possibles destinés à être transférés vers ledit au moins un deuxième point d'accès.

5. Procédé selon la revendication 1, dans lequel ledit au moins un premier module comprend un système d'ordinateur client traitant des données sensibles, et ledit au moins un deuxième module comprend un système d'ordinateur serveur recevant des données sensibles depuis ledit système d'ordinateur client sur ledit réseau.

6. Procédé selon la revendication 1, dans lequel ledit au moins un deuxième module t comprend un système d'ordinateur client traitant des données sensibles, et ledit au moins un premier module comprend un système d'ordinateur serveur recevant des données sensibles depuis ledit système d'ordinateur client sur ledit réseau.

7. Procédé selon la revendication 5 ou 6, dans lequel lesdites données sensibles se rapportent à des systèmes de dossier de patient et lesdits messages de données sont des prescriptions envoyées sur ledit réseau depuis un cabinet médical à une pharmacie.

8. Procédé selon la revendication 1, dans lequel ledit au moins un premier module et ledit au moins un deuxième module comprennent des ports de réseau pour connecter lesdits points d'accès à un réseau téléphonique public.

9. Procédé selon la revendication 1, dans lequel ledit port de communication dudit au moins un premier module comprend un port LAN permettant l'accès audit premier emplacement de stockage depuis une pluralité de systèmes d'ordinateurs connectés audit LAN.

10. Procédé selon la revendication 1, dans lequel ledit port de communication dudit au moins un premier module comprend un port RS232 pour connecter un système d'ordinateur via une ligne série.

11. Procédé selon la revendication 10, comprenant l'étape supplémentaire de retrait d'une connexion de signal de transmission Dx dans un câble allant dudit port de communication audit système d'ordinateur.

12. Procédé selon la revendication 10, dans lequel ledit port de communication fournit une communication SLIP (protocole Internet ligne série) limitée au transfert de données dans une direction allant dudit système d'ordinateur audit au moins un premier module.

13. Procédé selon la revendication 10, dans lequel ledit port de communication fournit une communication PPP (protocole de point à point) limitée au transfert de données dans une direction allant dudit système d'ordinateur audit au moins un premier module.

14. Procédé selon la revendication 1, dans lequel ledit port de communication dudit au moins un premier module fournit une communication USB (bus série universel) limitée au transfert de données dans une direction allant dudit système d'ordinateur audit au moins un premier module.

15. Procédé selon la revendication 10, dans lequel ledit port de communication dudit au moins un premier module fournit une communication série ou parallèle limitée au transfert de données dans une direction allant dudit système d'ordinateur audit au moins un premier module.

16. Procédé selon la revendication 1, dans lequel ledit système d'ordinateur ou périphérique d'ordinateur connecté audit port de communication dudit au moins un premier module est un serveur d'impression.

17. Procédé selon l'une quelconque des revendications précédentes, dans lequel ledit au moins un premier module et ledit deuxième module sont associés à des messages de données comprenant des prescriptions de médicaments, des cabinets médicaux et des pharmacies, respectivement.

18. Système pour communiquer des messages de données depuis au moins un premier module à un deuxième module dans un réseau, comprenant des réseaux publics, dans lequel ledit au moins un premier module et ledit deuxième module, en plus de ports de réseau, comprennent chacun respectivement un port de communication pour connecter un premier et un deuxième ordinateur auxdits premier et deuxième modules, respectivement, dans lequel le deuxième module est le seul élément qui peut lire les messages de données provenant de l'au moins un premier module ; ledit système comprend en outre :
un premier emplacement de stockage dans ledit au moins un premier module ayant des lignes de signal de données transmises audit port de communication dudit au moins un premier module, agencées de telle sorte que ledit premier emplacement de stockage peut uniquement recevoir des signaux sur lesdites lignes de données dans une direction de communication allant du premier ordinateur via ledit port de communication audit emplacement de stockage,
un deuxième emplacement de stockage dans ledit deuxième module ayant des lignes de signal de données transmises audit port de communication dudit deuxième module agencées de telle sorte que ledit deuxième emplacement de stockage peut amener des signaux sur lesdites lignes de données dans une direction de communication allant dudit emplacement de stockage audit port de communication,
dans le deuxième ordinateur associé audit deuxième module, un programme stocké dans le deuxième module qui, à des intervalles de temps prédéfinis, transfère des messages de données stockés dans ledit premier emplacement de stockage dans ledit au moins un premier module vers ledit deuxième emplacement de stockage dans ledit deuxième module, dans lequel ledit deuxième emplacement de stockage est accessible par le deuxième ordinateur via ledit port de communication du deuxième module.

19. Système selon la revendication 18, comprenant en outre des messages de données fournissant des informations de source d'un message de données et des informations concernant une destination d'un message de données.

20. Système selon la revendication 18 et 19, dans lequel le deuxième ordinateur associé audit au moins deuxième module comprend en outre des routines transmettant des messages de données reçus à des destinations desdits messages de données sur un réseau ou via un autre moyen pertinent.

21. Système selon la revendication 18, dans lequel ledit système d'ordinateur ou périphérique d'ordinateur associé audit au moins un deuxième module comprend en outre une base de données fournissant des informations concernant une pluralité de premiers points d'accès qui peuvent stocker des messages de données destinés à être transférés, et sur la base de ces informations, effectuer une recherche via ledit au moins un deuxième module contactant chacun dudit premier module comprenant des messages de données possibles destinés à être transférés audit au moins un deuxième module.

22. Système selon la revendication 18, dans lequel ledit au moins un premier module comprend un système d'ordinateur client traitant des données sensibles, et ledit au moins un deuxième module comprend un système d'ordinateur serveur recevant des données sensibles depuis ledit système d'ordinateur client sur ledit réseau.

23. Système selon la revendication 18, dans lequel ledit au moins un deuxième module t comprend un système d'ordinateur client traitant des données sensibles, et ledit au moins un premier module comprend un système d'ordinateur serveur recevant des données sensibles depuis ledit système d'ordinateur client sur ledit réseau.

24. Procédé selon la revendication 22 ou 23, dans lequel lesdites données sensibles se rapportent à des systèmes de dossier de patient et lesdits messages de données sont des prescriptions envoyées sur ledit réseau depuis un cabinet médical à une pharmacie.

25. Système selon la revendication 18, comprenant en outre des ports de réseau dans ledit au moins un premier module et ledit au moins un deuxième module permettant l'accès à des réseaux téléphoniques publics.

26. Système selon la revendication 18, comprenant un port LAN en tant que port de communication précité dudit au moins un premier module.

27. Système selon la revendication 18, comprenant un port RS232 en tant que port de communication précité dudit au moins un premier module.

28. Système selon la revendication 27, comprenant un câble RS232 connecté dudit port de communication audit ordinateur, dans lequel une connexion de signal de transmission Dx dans ledit câble depuis ledit port de communication vers ledit ordinateur est retirée.

29. Système selon la revendication 27, dans lequel ledit port de communication fournit une communication SLIP (protocole Internet ligne série) limitée au transfert de données dans une direction allant dudit ordinateur audit au moins un premier module.

30. Système selon la revendication 27, dans lequel ledit port de communication fournit une communication PPP (protocole de point à point) limitée au transfert de données dans une direction allant dudit système d'ordinateur audit au moins un premier module.

31. Système selon la revendication 18, dans lequel ledit port de communication dudit au moins un premier module fournit une communication USB (bus série universel) limitée au transfert de données dans une direction allant dudit système d'ordinateur audit au moins un premier module.

32. Système selon la revendication 10, dans lequel ledit port de communication dudit au moins un premier module fournit une communication série ou parallèle limitée au transfert de données dans une direction allant dudit système d'ordinateur audit au moins un premier module.

33. Système selon la revendication 18, dans lequel ledit système d'ordinateur ou périphérique d'ordinateur connecté audit port de communication dudit au moins un premier module est un serveur d'impression.

34. Système selon l'une quelconque des revendications 18 à 33 précédentes, dans lequel ledit au moins un premier module et ledit au moins un deuxième module sont associés à des messages de données comprenant des prescriptions de médicaments, des cabinets médicaux et des pharmacies, respectivement.

35. Système selon la revendication 18, comprenant en outre une unité de chiffrement comprise dans ledit au moins un premier module chiffrant lesdits messages de données stockés dans ledit premier emplacement de stockage.

36. Système selon la revendication 18, comprenant en outre une unité de déchiffrement comprise dans ledit au moins un deuxième module déchiffrant lesdits messages de données stockés dans ledit deuxième emplacement de stockage.

37. Dispositif pour un premier module à utiliser dans un système selon la revendication 18, comprenant :
• châssis
• alimentations
• carte principale
• processeur
• mémoire
• unité de chiffrement
• logiciel exécuté dans ledit processeur mettant en oeuvre des étapes d'un procédé selon la revendication 1
• port FireWire 1394
• emplacement pour carte d'interface PCI comprenant une interface réseau

38. Dispositif pour un deuxième module à utiliser dans un système selon la revendication 18, comprenant :
• châssis
• alimentations
• carte principale
• processeur
• mémoire
• unité de déchiffrement
• logiciel exécuté dans ledit processeur mettant en oeuvre des étapes d'un procédé selon la revendication 1
• port FireWire 1394
• emplacement pour carte d'interface PCI comprenant une interface réseau
